# EUROPÄISCHE PATENTSCHRIFT

(11) **EP 3 533 985 B1**
(45) Veröffentlichungstag und Bekanntmachung des Hinweises auf die Patenterteilung: **28.01.2026**
(21) Anmeldenummer: 19157135.5
(22) Anmeldetag: 14.02.2019
(51) Int. Cl.: F02D 41/00, F02D 41/14, F02M 25/08

(54) **VERFAHREN ZUM BETREIBEN EINER BRENNKRAFTMASCHINE, BRENNKRAFTMASCHINE UND KRAFTFAHRZEUG**
COMBUSTION ENGINE, MOTOR VEHICLE AND METHOD FOR OPERATING A COMBUSTION ENGINE
PROCÉDÉ DE FONCTIONNEMENT D'UN MOTEUR À COMBUSTION INTERNE, MOTEUR À COMBUSTION INTERNE ET VÉHICULE AUTOMOBILE

(30) Priorität: 28.02.2018 DE 102018104622
(43) Veröffentlichungstag der Anmeldung: 04.09.2019
(73) Patentinhaber: VOLKSWAGEN AKTIENGESELLSCHAFT, 38440 Wolfsburg (DE)
(72) Erfinder: WODAUSCH, Jens, 38108 Braunschweig (DE); FRÖHLICH, Björn, 38518 Gifhorn (DE); WEDDIG, Silke, 38114 Braunschweig (DE)
(74) Vertreter: Bungartz, Florian

(56) Entgegenhaltungen:
- EP-A1- 2 627 889
- EP-A1- 3 354 508
- WO-A1-2012/049230
- DE-A1- 102015 216 504

## Beschreibung

Die Erfindung betrifft ein Verfahren zum Betreiben einer Brennkraftmaschine mit einem ein Tankentlüftungsventil umfassenden Kraftstofftanksystem. Die Erfindung betrifft weiterhin eine zur Durchführung eines solchen Verfahrens geeignete Brennkraftmaschine sowie ein Kraftfahrzeug mit einer solchen Brennkraftmaschine.

Ein Kraftstofftanksystem für eine Brennkraftmaschine eines Kraftfahrzeugs weist regelmäßig eine Entlüftungsleitung auf, die es ermöglicht, einen ansteigenden Druck in dem Kraftstofftank des Tanksystems infolge von beispielsweise bei hohen Umgebungstemperaturen verdampfendem Kraftstoff an die Umgebung zu entlasten. Dabei dürfen, auch aufgrund von Emissionsvorschriften, möglichst keine Kraftstoffdämpfe in die Umgebung gelangen. Dies wird verhindert, indem in die Entlüftungsleitung ein Kraftstoffdampffilter, der regelmäßig in Form eines Aktivkohlefilters ausgebildet ist, integriert ist, der die Kraftstoffdämpfe absorbiert.

Zur Regeneration eines solchen Kraftstoffdampffilters ist ein solches Tanksystem zusätzlich mit einer Spülgasleitung versehen, die einerseits mit dem Kraftstoffdampffilter und andererseits mit dem Frischgasstrang der Brennkraftmaschine verbunden ist. Im Betrieb der Brennkraftmaschine kann zeitweise mittels Unterdrucks, der im Bereich der Mündung der Spülgasleitung in den Frischgasstrang im Vergleich zu dem Umgebungsdruck herrscht, Umgebungsluft über eine Umgebungsmündung des Kraftstoffdampffilters angesaugt werden, die den Kraftstoffdampffilter in Gegenrichtung zu derjenigen Strömungsrichtung, in der die Kraftstoffdämpfe aus dem Kraftstofftank in den Kraftstoffdampffilter strömen, durchströmen und diesen dadurch spülen. Die Kraftstoffdämpfe aus dem Kraftstoffdampffilter werden so über den Frischgasstrang den Brennräumen des Verbrennungsmotors der Brennkraftmaschine zugeführt.

Die DE 44 01 887 A1 offenbart eine Regelung eines Spülgasstroms in einer Spülgasleitung eines Kraftstofftanksystems mittels eines Regelventils basierend auf dem Messsignal eines in den Abgasstrang einer dazugehörigen Brennkraftmaschine integrierten Lambdasensors.

Die DE 10 2011 086 946 A1 beschreibt eine mittels eines Verdichters aufgeladene Brennkraftmaschine mit einem Kraftstofftanksystem, das über zwei Spülgasleitungen entlüftet werden kann, wobei eine erste, ein Entlüftungsventil integrierende Spülgasleitung in einen Abschnitt des Frischgasstrangs stromab des Verdichters und eine zweite, eine Spülgasfördervorrichtung umfassende zweite Spülgasleitung in einen Abschnitt des Frischgasstrangs stromauf des Verdichters mündet. Eine Beladung eines Kraftstoffdampffilters des Tanksystems wird basierend auf dem Messsignal eines Lambdasensors ermittelt.

Die EP 3 354 508 A1 offenbart ein Verfahren zum Regenerieren eines Sorptionsspeichers eines Tanksystems einer Brennkraftmaschine mit den Schritten:
- Erfassen eines Betriebszustandes der Brennkraftmaschine;
- Ansteuern einer Spülluftpumpe und Einstellen des Spülluftstromes entsprechend einem Betriebszustand eines Verbrennungsmotors und/oder eines Verdichters der Brennkraftmaschine;
- Regenerieren des Kraftstoffs aus dem Sorptionsspeicher;
- Dosieren des regenerierten Kraftstoffs über den Spülluftstrom in den Ansaugluftstrom, der zu dem Verbrennungsmotor geleitet wird,
wobei das Einstellen des Spülluftstromes und Dosieren des regenerierten Kraftstoffs unter Berücksichtigung eines der folgenden Parameter erfolgt: λ-Wert, Spülluftdruck, Spülluftvolumenstrom, Spüllufttemperatur.

Die DE 10 2015 216 504 A1 offenbart ein Verfahren zum Entlüften eines Kraftstofftanksystems einer Brennkraftmaschine, das einen Kraftstofftank, einen Kraftstoffdampffilter, der in fluidleitender Verbindung mit einer Umgebungsmündung steht, eine von dem Kraftstofftank zu dem Kraftstoffdampffilter führende Entlüftungsleitung, eine von dem Kraftstoffdampffilter zu einem Frischgasstrang der Brennkraftmaschine führende Spülgasleitung, und eine in die Spülgasleitung integrierte Spülgasfördervorrichtung umfasst, wobei die Brennkraftmaschine weiterhin einen Abgasstrang mit darin integriertem Lambdasensor aufweist. Vorgesehen ist, dass in einer ersten Phase zur Tankentlüftung nach einem Kaltstart der Brennkraftmaschine Kraftstoffdämpfe mittels der Spülgasfördervorrichtung aus dem Kraftstofftank gefördert werden, während ein in die Belüftungsleitung integriertes Belüftungsventil geschlossen gehalten ist. Daher werden in dieser ersten Phase ausschließlich Kraftstoffdämpfe und keine Luft als Spülgas durch die Spülgasleitung gefördert. Erst wenn ein Grenzwert für den Unterdruck in dem Kraftstofftank erreicht wird, wird das Belüftungsventil geöffnet und dann eine Regeneration des Kraftstoffdampffilters mittels Lufts, die über die Entlüftungsleitung angesaugt wird, durchgeführt. Die Lambdasonde kann während der ersten Phase genutzt werden, um die HC-Konzentration der durch die Spülgasleitung strömenden Kraftstoffdämpfe zu ermitteln, um darauf basierend die Drehzahl der Spülgasfördervorrichtung und damit den Volumenstrom in der Spülgasleitung einzustellen.

Die EP 2 627 889 A1 beziehungsweise die WO 2012/049219 A1 offenbart ein Verfahren und eine Vorrichtung zum Betreiben eines Tankentlüftungssystems mit einem in eine Spülluftleitung integrierten Spülluftventil.

Die WO 2012/049230 A1 beschreibt eine Brennkraftmaschine mit einem Tankentlüftungssystem, bei dem in einer Spülgasleitung ein HC-Sensor zum Ermitteln eines Kohlenwasserstoffgehalts eines Gasstroms angeordnet ist. Weiterhin ist in einen Abgasstrang der Brennkraftmaschine eine beispielsweise als Lambdasonde ausgebildete Messvorrichtung integriert, die eine Abgaskenngröße ermittelt, mit einem vorgegebenen Sollwert vergleicht und beim Überschreiten eines Grenzwerts der dabei ermittelten Differenz eine Prüfung dahingehend, ob der HC-Sensor eine Fehlfunktion aufweist, auslöst.

Der Erfindung lag die Aufgabe zugrunde, ein vorteilhaftes Verfahren zum Entlüften eines Kraftstofftanksystems einer Brennkraftmaschine anzugeben.

Diese Aufgabe wird mittels eines Verfahrens gemäß dem Patentanspruch 1 gelöst. Eine zur Durchführung eines solchen Verfahrens geeignete Brennkraftmaschine ist Gegenstand des Patentanspruchs 3. Vorteilhafte Ausführungsformen des erfindungsgemäßen Verfahrens und bevorzugte Ausgestaltungsformen der erfindungsgemäßen Brennkraftmaschine sind Gegenstände der weiteren Patentansprüche und/oder ergeben sich aus der nachfolgenden Beschreibung der Erfindung.

Erfindungsgemäß ist ein Verfahren zum Entlüften eines Kraftstofftanksystems einer Brennkraftmaschine vorgesehen, wobei das Kraftstofftanksystem zumindest
- einen Kraftstofftank,
- einen Kraftstoffdampffilter, der in fluidleitender Verbindung mit einer Umgebungsmündung steht,
- eine von dem Kraftstofftank zu dem Kraftstoffdampffilter führende Entlüftungsleitung,
- eine von dem Kraftstoffdampffilter zu einem Frischgasstrang der Brennkraftmaschine führende Spülgasleitung,
- eine in die Spülgasleitung integrierte Spülgasfördervorrichtung, d.h. eine sogenannte Spülgaspumpe und
- ein in die Spülgasleitung integriertes Regelventil (sogenanntes Tankentlüftungsventil)
umfasst. Die Brennkraftmaschine weist weiterhin einen Abgasstrang mit darin integrierter Lambdasonde auf. Dabei wird eine Ansteuerung der Spülgasfördervorrichtung basierend auf dem Messsignal des Lambdasensors durchgeführt, um einen Mengenstrom des Spülgases in der Spülgasleitung zu regeln. Weiterhin wird auch eine Ansteuerung des Regelventils basierend auf dem Messsignal des Lambdasensors durchgeführt, um den Mengenstrom des Spülgases in der Spülgasleitung beziehungsweise den Mengenstrom des in den Frischgasstrang eingebrachten Spülgases zu regeln. Dadurch kann besonders exakt die in das Frischgas einzubringende Spülgasmenge dosiert werden, was sich positiv auf das Erreichen eines definierten Kraftstoff-Sauerstoff-Verhältnisses der in den oder die Brennräume des Verbrennungsmotors eingebrachten Kraftstoff-Luft-Gemischmengen auswirkt und dadurch zu einem vorteilhaften Betrieb des Verbrennungsmotors mit insbesondere einem möglichst hohen Wirkungsgrad und möglichst geringen Schadstoffemissionen führen kann.

Eine Ansteuerung der Spülgasfördervorrichtung und des Regelventils wird für zumindest eine, vorzugsweise für jede dieser Komponenten unter Berücksichtigung des Ansteuerwerts der anderen Komponente durchgeführt, wodurch sich eine besonders vorteilhafte Regelung einstellen kann. Dabei ist vorgesehen, dass die Spülgasfördervorrichtung in mehreren Antriebsdrehzahlstufen betrieben und das Regelventil in einem Ansteuerbereich (z.B. 0% bis 100%) angesteuert wird, wobei von einer relativ kleinen Antriebsdrehzahlstufe zu einer relativ großen Antriebsdrehzahlstufe gewechselt wird, wenn während eines Betriebs der Spülgasfördervorrichtung in der relativ kleinen Antriebsdrehzahlstufe trotz einer maximalen Ansteuerung des Regelventils ein größerer Spülgasbedarf ermittelt wird beziehungsweise ein größerer Mengenstrom des Spülgases in der Spülgasleitung eingestellt werden soll.

Die Bezeichnung "Kraftstoffdampffilter" bedingt erfindungsgemäß nicht, dass dieser den flüchtigen Kraftstoff in gasförmiger Form filtern muss. Vielmehr kann der Kraftstoff bei der Filterung auch schon wieder (teilweise) auskondensiert sein.

Eine erfindungsgemäße Brennkraftmaschine umfasst einerseits zumindest
- einen vorzugsweise fremdgezündeten Verbrennungsmotor (z.B. Ottomotor),
- einen Frischgasstrang zum Zuführen von Frischgas zu dem Verbrennungsmotor,
- einen eine Lambdasonde umfassenden Abgasstrang zum Abführen von Abgas von dem Verbrennungsmotor und
- ein Kraftstofftanksystem, das zumindest
   - einen Kraftstofftank,
   - einen Kraftstoffdampffilter, der in fluidleitender Verbindung mit einer Umgebungsmündung steht,
   - eine von dem Kraftstofftank zu dem Kraftstoffdampffilter führende Entlüftungsleitung,
   - eine von dem Kraftstoffdampffilter zu dem Frischgasstrang der Brennkraftmaschine führende Spülgasleitung,
   - eine in die Spülgasleitung integrierte Spülgasfördervorrichtung und
   - ein in die Spülgasleitung integriertes Regelventil
   umfasst. Weiterhin weist eine erfindungsgemäße Brennkraftmaschine eine Steuerungsvorrichtung auf, die zur automatisierten Durchführung eines erfindungsgemäßen Verfahrens ausgebildet ist.

Das erfindungsgemäße Verfahren kann besonders vorteilhaft bei einer Brennkraftmaschine durchgeführt werden, die, wie dies auch für eine erfindungsgemäße Brennkraftmaschine bevorzugt vorgesehen ist, zusätzlich einen Lambdaregler umfasst, bei dem es sich um eine Vorrichtung beziehungsweise um eine softwaretechnische Einrichtung handelt, die basierend auf dem Messsignal des Lambdasensors die Mengen des in den oder die Brennräume des Verbrennungsmotors eingebrachten Kraftstoffs derart regelt, dass unter Berücksichtigung des ebenfalls über das Frischgas in die Brennräume eingebrachten Sauerstoffs ein definiertes, bei einem fremdgezündeten Verbrennungsmotor in der Regel ein in etwa stöchiometrisches Kraftstoff-Sauerstoff-Verhältnis eingestellt ist. Da eine solche Brennkraftmaschine für den Betrieb eines solchen Lambdareglers ohnehin eine Lambdasonde umfassen sollte, ermöglicht das erfindungsgemäße Verfahren eine Regelung der Entlüftung des Kraftstofftanksystems der Brennkraftmaschine ohne zusätzliche Sensorik, was sich vorteilhaft auf die Kosten für die Herstellung einer solchen Brennkraftmaschine auswirkt.

Gemäß einer bevorzugten Ausführungsform eines erfindungsgemäßen Verfahrens kann vorgesehen sein, dass zur Ansteuerung der Spülgasfördervorrichtung und/oder des Regelventils der Absolutwert des Messsignals des Lambdasensors und/oder ein aus diesem Absolutwert abgeleiteter Korrekturwert für den Lambdaregler der Brennkraftmaschine genutzt wird.

Gemäß einer bevorzugten Ausgestaltungsform einer erfindungsgemäßen Brennkraftmaschine kann diese einen in die Spülgasleitung integrierten Druck- und/oder Temperatursensor umfassen. Ein solcher Druck- und/oder Temperatursensor kann insbesondere zu Diagnosezwecken und/oder zur Bestimmung der Konzentration an Kohlenwasserstoffen (HC) in dem Spülgas genutzt werden. Durch eine zusätzliche Berücksichtigung der HC-Konzentrationen kann noch genauer ermittelt werden, welche Mengen an Kohlenwasserstoffen über das Spülgas in den Frischgasstrang und über diesen in die Brennräume des Verbrennungsmotors eingebracht werden, was wiederum durch eine entsprechende Ansteuerung des Verbrennungsmotors, insbesondere hinsichtlich von über Einspritzventile eingebrachtem Kraftstoff, kompensiert werden kann, um einen möglichst vorteilhaften Betrieb des Verbrennungsmotors zu realisieren.

Weiterhin kann eine erfindungsgemäße Brennkraftmaschine in vorteilhafter Weise ein in die Spülgasleitung integriertes Absperrventil umfassen, mittels dessen bedarfsweise und zusätzlich zu dem Regelventil die Durchströmung der Spülgasleitung beeinflusst und insbesondere unterbrochen werden kann. Mittels eines solchen Absperrventils kann insbesondere unabhängig von dem Regelventil eine möglichst schnelle Abriegelung der Spülgasleitung und damit des Kraftstofftanksystems von dem Frischgasstrang der Brennkraftmaschine realisiert werden.

Eine erfindungsgemäße Brennkraftmaschine kann insbesondere Teil eines Kraftfahrzeugs sein. Dabei kann der Verbrennungsmotor der Brennkraftmaschine insbesondere zur direkten oder indirekten Bereitstellung der Antriebsleistung für das Kraftfahrzeug vorgesehen sein. Die Erfindung betrifft daher weiterhin ein Kraftfahrzeug, insbesondere ein radbasiertes und nicht schienengebundenen Kraftfahrzeug (vorzugsweise ein PKW oder ein LKW), mit einer erfindungsgemäßen Brennkraftmaschine.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die vorliegende Erfindung wird nachfolgend anhand eines in den Zeichnungen dargestellten Ausgestaltungsbeispiels näher erläutert. In den Zeichnungen zeigt:
- Fig. 1:: in schematischer Darstellung eine erfindungsgemäße Brennkraftmaschine gemäß einer ersten Ausgestaltungsform;
- Fig. 2:: ein Blockschaltbild zur Veranschaulichung der Durchführung eines erfindungsgemäßen Verfahrens basierend auf der Brennkraftmaschine gemäß der Fig. 1; und
- Fig. 3:: in schematischer Darstellung eine erfindungsgemäße Brennkraftmaschine gemäß einer zweiten Ausgestaltungsform;

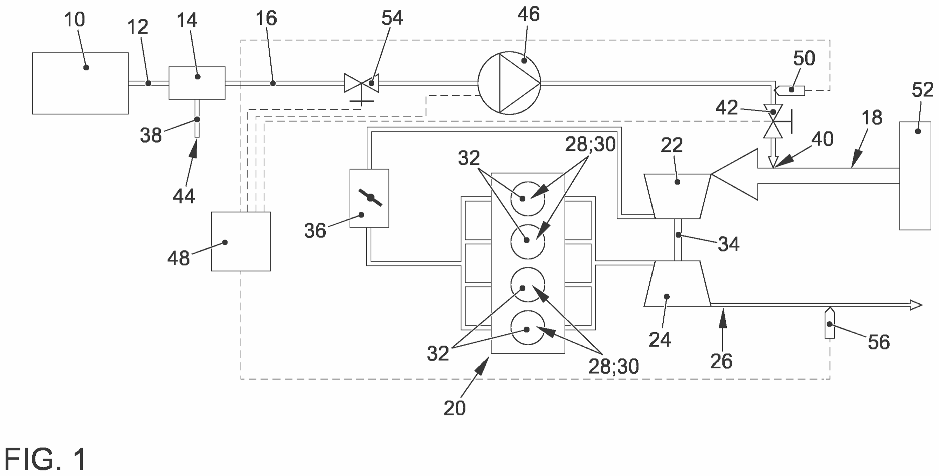

Die Fig. 1 zeigt eine erfindungsgemäße Brennkraftmaschine für ein Kraftfahrzeug mit einem Kraftstofftanksystem. Dieses umfasst einen Kraftstofftank 10, der über eine Entlüftungsleitung 12 mit einem Kraftstoffdampffilter 14, der insbesondere in Form eines Aktivkohlefilters ausgebildet sein oder zumindest einen solchen umfassen kann, verbunden ist. Der Kraftstoffdampffilter 14 ist weiterhin über eine Spülgasleitung 16 mit einem Frischgasstrang 18 der Brennkraftmaschine verbunden, wobei die Spülgasleitung 16 in den Frischgasstrang 18 stromauf (bezüglich der Strömungsrichtung von Frischgas in dem Frischgasstrang 18 in Richtung eines Verbrennungsmotor 20 der Brennkraftmaschine) eines in den Frischgasstrang 18 integrierten Ladeluftverdichters 22 mündet. Der Ladeluftverdichter 22 ist Teil eines Abgasturboladers, der weiterhin eine Abgasturbine 24 umfasst, die in einen Abgasstrang 26 der Brennkraftmaschine integriert ist. In der zwischen dem Ladeluftverdichter 22 und dem Verbrennungsmotor 20 gelegenen Ladeluftstrecke des Frischgasstrangs 18 ist noch eine Drosselklappe 36 vorgesehen, die die Ladeluftstrecke in einen stromauf gelegenen, häufig als Druckrohr bezeichneten Abschnitt sowie einen stromab gelegenen, häufig als Saugrohr bezeichneten Abschnitt unterteilt.

Im Betrieb der Brennkraftmaschine wird in bekannter Weise in definierter Reihenfolge in Brennräumen 28 des Verbrennungsmotors 20, die teilweise von Zylindern 30 des Verbrennungsmotors 20 begrenzt sind, Gemischmengen, die aus Frischgas, das vollständig oder hauptsächlich aus Umgebungsluft besteht und über einen Luftfilter 52 aus der Umgebung angesaugt wird, sowie aus beispielsweise direkt mittels nicht dargestellten Einspritzventilen in die Brennräume 28 eingespritztem Kraftstoff bestehen, verbrannt, wobei die so erzeugten Druckerhöhungen in den Brennräumen 28 dazu genutzt werden, in den Zylindern 30 längsaxial beweglich geführte Kolben 32 zu bewegen. Diese Bewegungen der Kolben 32 werden unter Zwischenschaltung von Pleueln (nicht dargestellt) in eine Drehbewegung einer Kurbelwelle (nicht dargestellt) gewandelt, wobei die Führung der Kolben 32 über die Pleuel mittels der Kurbelwelle gleichzeitig zu einer zyklischen Hin-und-her-Bewegung der Kolben 32 führt. Das bei der Verbrennung der Frischgas-Kraftstoff-Gemischmengen in den Brennräumen 28 entstandene Abgas wird über den Abgasstrang 26 abgeführt und durchströmt dabei die Abgasturbine 24, was zu einem drehenden Antrieb eines Turbinenlaufrads (nicht dargestellt) führt. Diese Drehung des Turbinenlaufrads wird mittels einer Welle 34 auf ein Verdichterlaufrad (nicht dargestellt) des Ladeluftverdichters 22 übertragen, wodurch der Ladeluftverdichter 22 für eine Verdichtung des über den Frischgasstrang 18 dem Verbrennungsmotor 20 zuzuführenden Frischgases sorgt.

Der Kraftstoffdampffilter 14 des Kraftstofftanksystems steht mit seiner bezüglich der Entlüftungsleitung 12 und der Spülgasleitung 16 abgewandten Seite (bezogen auf dessen Filterwirkung für Kraftstoffdämpfe) über eine Umgebungsluftleitung 38 mit der Umgebung in gasleitender Verbindung, wozu die Umgebungsluftleitung 38 eine Umgebungsmündung 44 ausbildet.

Der Kraftstofftank 10 ist teilweise mit Kraftstoff gefüllt, wobei ein Teil dieses eigentlich flüssigen Kraftstoffs in der Regel verdampft ist, so dass in dem Kraftstofftank 10 auch Kraftstoff in gasförmigem Aggregatzustand vorliegt. Ein solches Verdampfen von Kraftstoff in dem Kraftstofftank 10 wird durch eine relativ hohe Temperatur des Kraftstoffs verstärkt, was insbesondere bei relativ hohen Umgebungstemperaturen sowie bei einer Änderung des Umgebungsdrucks, beispielsweise infolge einer Bergfahrt eines die Brennkraftmaschine umfassenden Kraftfahrzeugs, der Fall sein kann. Um einen durch ein solches Verdampfen bedingten, unzulässig hohen Überdruck in dem Kraftstofftank 10 zu vermeiden, ist die Möglichkeit eines Druckausgleichs mit dem Umgebungsdruck über die Entlüftungsleitung 12 und den Kraftstoffdampffilter 14 sowie über die Umgebungsluftleitung 38 gegeben, wobei durch den Kraftstoffdampffilter 14 vermieden wird, dass ein solcher Druckausgleich zu einem Entweichen von Kraftstoffdämpfen in die Umgebung führt.

Ein solches Entlüften des Kraftstofftanks 10 führt zu einer zunehmenden Sättigung des Kraftstoffdampffilters 14, was wiederum bedingt, diesen in regelmäßigen Abständen zu regenerieren. Hierzu ist ein Spülen des Kraftstoffdampffilters 14 vorgesehen, indem Umgebungsluft über die Umgebungsmündung 44 und die Umgebungsluftleitung 38 angesaugt wird. Diese Umgebungsluft durchströmt den Kraftstoffdampffilter 14 in im Vergleich zu der Durchströmung bei der Entlüftung des Kraftstofftanks 10 entgegengesetzter Richtung, wodurch in dem Kraftstoffdampffilter 10 absorbierte Kraftstoffmoleküle durch die Umgebungsluft mitgenommen und über die Spülgasleitung 16 in den Frischgasstrang 18 eingetragen werden. Dadurch wird dieser Kraftstoff, der in der Regel eine Mischung unterschiedlicher Kohlenwasserstoffe umfasst, einer Verbrennung in den Brennräumen 28 des Verbrennungsmotors 20 zugeführt.

Ein solches Spülen des Kraftstoffdampffilters 14 ist lediglich zeitweise und stets während des Betriebs des Verbrennungsmotors 20 vorgesehen, weil nur dann der durch das Spülen des Kraftstoffdampffilters 14 in den Frischgasstrang 18 eingebrachte Kraftstoff auch sicher einer Verbrennung in den Brennräumen 34 zugeführt werden kann. Ein Einbringen in den Frischgasstrang 18 bei einem Nichtbetrieb des Verbrennungsmotors 26 könnte dagegen dazu führen, dass der gasförmige Kraftstoff über Undichtigkeiten des Frischgasstrangs 18 und insbesondere über eine Ansaugöffnung des Frischgasstrangs 18 in die Umgebung entweichen könnte.

In die Spülgasleitung 16 ist ein Regel- beziehungsweise Tankentlüftungsventil 42 integriert, das möglichst nah an der Mündung 40 der Spülgasleitung 16 in den Frischgasstrang 18 angeordnet oder in diese integriert ist.

Für ein Spülen des Kraftstoffdampffilters 14 ist ein ausreichendes Druckgefälle zwischen einerseits dem Umgebungsdruck und andererseits dem Druck in dem Frischgasstrang 18 im Bereich der Mündung 40 der Spülgasleitung 16 erforderlich, die aufgrund stark schwankender Drücke in dem Frischgasstrang 18 während eines Betriebs des Verbrennungsmotors 20 nicht immer gegeben ist. Während eines Betriebs des Verbrennungsmotors 20 und damit des Ladeluftverdichters 22 ist der Druck des Frischgases in dem Abschnitt des Frischgasstrangs 18 im Bereich der Mündung 40 der Spülgasleitung 16 meistens so niedrig, dass ein ausreichendes Druckgefälle im Vergleich zu dem an der Umgebungsmündung 44 anliegenden Umgebungsdruck vorliegt. Dies ist jedoch nicht immer der Fall.

Um jederzeit ein Spülen des Kraftstoffdampffilters 14 zu ermöglichen, so dass sicher eine vollständige Sättigung desselben verhindert werden kann, umfasst das Kraftstofftanksystem der Brennkraftmaschine noch eine in die Spülgasleitung 16 integrierte Spülgasfördervorrichtung 46, die regelmäßig auch als "Spülluftpumpe" bezeichnet wird und die in Form eines Kolbenverdichters, insbesondere als Flügelzellenverdichter, oder als Radialgebläse ausgebildet sein kann. Durch einen Betrieb dieser Spülgasfördervorrichtung 46 kann aktiv Umgebungsluft über die Umgebungsmündung 44 angesaugt werden, die dann den Kraftstoffdampffilter 14 zu dessen Spülung durchströmt und über die Spülgasfördervorrichtung 46 und das zumindest teilweise geöffnete Tankentlüftungsventil 42 bis zu der Mündung 40 der Spülgasleitung 16 gefördert werden kann. Weiterhin ist in die Spülgasleitung 16 in einem Abschnitt zwischen dem Kraftstoffdampffilter 14 und der Spülgasfördervorrichtung 46 ein Absperrventil 54 integriert, das zwei Schaltstellungen aufweist. In einer ersten Schaltstellungen ist eine Durchströmung der Spülgasleitung 16 durch das Absperrventil 54 vollständig verhindert, während dieses eine solche Durchströmung in der zweiten Schaltstellung weitestmöglich freigibt.

Zumindest die Spülgasfördervorrichtung 46, das Tankentlüftungsventil 42, das Absperrventil 54, die Drosselklappe 36 und die Einspritzventile sind mittels einer Steuerungsvorrichtung 48 (z.B. der Motorsteuerung der Brennkraftmaschine) ansteuerbar. Gleichzeitig empfängt die Steuerungsvorrichtung 48 Messsignale eines in einem Abschnitt zwischen der Spülgasfördervorrichtung 46 und dem Tankentlüftungsventil 42 in die Spülgasleitung 16 integrierten Drucksensors 50 sowie einer stromab der Abgasturbine 24 in den Abgasstrang 26 integrierten Lambdasonde 56. Die Steuerungsvorrichtung 48 dient weiterhin als Lambdaregler der Brennkraftmaschine, wozu diese die Mengen von in die Brennräume 28 einzuspritzendem Kraftstoff derart bestimmt, dass im Betrieb ein definiertes, ggf. variierendes Kraftstoff-Sauerstoff-Verhältnis der Kraftstoff-Frischgas-Gemischmengen, die in den Brennräumen 28 verbrannt werden, möglichst exakt eingehalten wird.

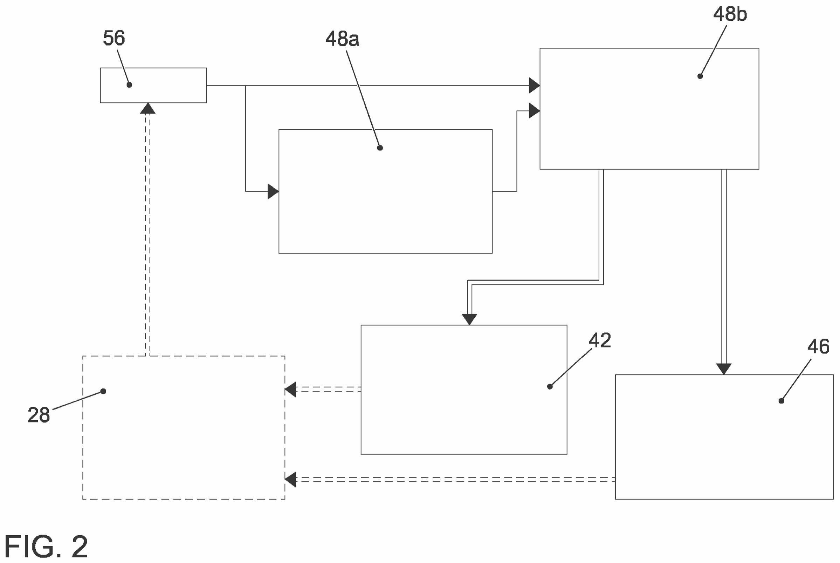

Die Fig. 2 veranschaulicht in einem Blockschaltbild die funktionalen Zusammenhänge bei der Durchführung eines erfindungsgemäßen Verfahrens zum Entlüften des Kraftstofftanksystems der Brennkraftmaschine gemäß der Fig. 1.

In der Fig. 2 ist dargestellt, dass Abgas, das bei der Verbrennung der Kraftstoff-Frischgas-Gemischmengen in den Brennräumen 28 des Verbrennungsmotors 20 entstanden ist, die in den Abgasstrang 26 integrierte Lambdasonde 56 umströmt, die daraufhin ein Messsignal erzeugt, dass den Anteil an Restsauerstoff im Abgas wiedergibt. Dieses Messsignal wird an die Steuerungsvorrichtung 48 übertragen, die dieses sowohl in ihrer Funktion als Lambdaregler 48a als auch in ihrer Funktion als Regelvorrichtung 48b zur Tankentlüftung beziehungsweise zur Ansteuerung der Spülgasfördervorrichtung 46, des Tankentlüftungsventils 42 und des Absperrventils 54 nutzt. Dabei kann vorgesehen sein, dass der Steuerungsvorrichtung 48 in ihrer Funktion als Regelvorrichtung 48b zur Tankentlüftung sowohl der Absolutwert des Messsignals der Lambdasonde 56 als auch ein Korrekturwert, der von der Steuerungsvorrichtung 48 in ihrer Funktion als Lambdaregler 48a ermittelt wurde, um basierend auf dem Messsignal der Lambdasonde 56 die Einspritzventile und die Drosselklappe 36 neu beziehungsweise in veränderter Form anzusteuern, um ein definiertes Kraftstoff-Sauerstoff-Verhältnis der Kraftstoff-Frischgas-Gemischmengen, die in den Brennräumen 28 verbrannt werden, einzuhalten, verwendet werden. Basierend auf diesen Eingangsgrößen berechnet die Steuerungsvorrichtung 48 in ihrer Funktion als Regelvorrichtung 48b zur Tankentlüftung Ansteuersignale für die Spülgasfördervorrichtung 46 und das Tankentlüftungsventil 42. Durch einen entsprechenden Antrieb der Spülgasfördervorrichtung 46 und eine entsprechende Einstellung des Tankentlüftungsventils 42 wird die Menge des in den Frischgasstrang 18 eingebrachten Spülgases beeinflusst, was wiederum einen Einfluss auf den insgesamt, d.h. über einerseits die Einspritzventile und andererseits das Frischgas in die Brennräume 28 eingebrachten Kraftstoffs hat. Die Ansteuerung der Spülgasfördervorrichtung 46 und des Tankentlüftungsventils 42 wird dabei unter Berücksichtigung jeweils des Ansteuerwerts der anderen Komponente durchgeführt.

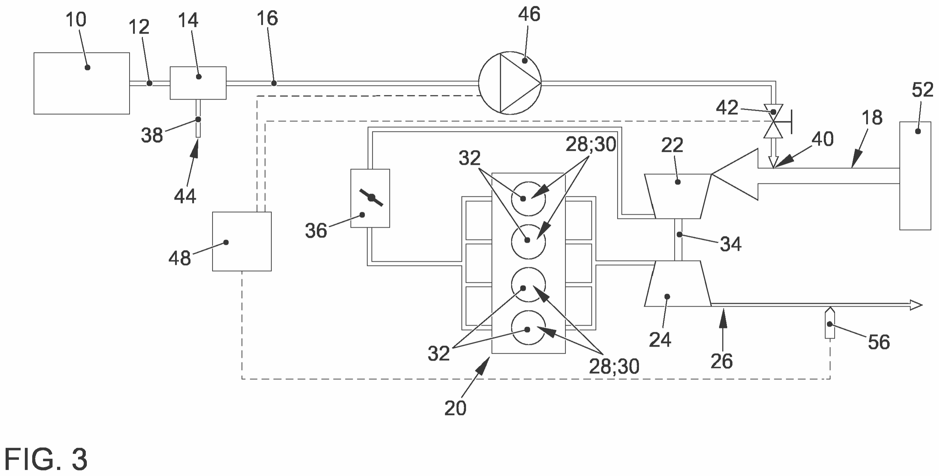

Bei der Brennkraftmaschine gemäß der Fig. 3 ist neben der Spülgasfördervorrichtung 46 nur noch ein Tankentlüftungsventil 42 in die Spülgasleitung 16 integriert. Im Unterschied zu der Brennkraftmaschine gemäß der Fig. 1 ist somit kein Druck- und Temperatursensor 50 und auch kein Absperrventil 54 vorgesehen. Die funktionalen Zusammenhänge bei der Durchführung eines erfindungsgemäßen Verfahrens basierend auf einer solchen Brennkraftmaschine gemäß der Fig. 3 können denen der Fig. 2 entsprechen.

### BEZUGSZEICHENLISTE

- 10: Kraftstofftank
- 12: Entlüftungsleitung
- 14: Kraftstoffdampffilter
- 16: Spülgasleitung
- 18: Frischgasstrang
- 20: Verbrennungsmotor
- 22: Ladeluftverdichter
- 24: Abgasturbine
- 26: Abgasstrang
- 28: Brennraum des Verbrennungsmotors
- 30: Zylinder des Verbrennungsmotors
- 32: Kolben des Verbrennungsmotors
- 34: Welle
- 36: Drosselklappe
- 38: Umgebungsluftleitung
- 40: Mündung der Spülgasleitung
- 42: Regelventil / Tankentlüftungsventil
- 44: Umgebungsmündung
- 46: Spülgasfördervorrichtung
- 48: Steuerungsvorrichtung
- 48a: Funktion der Steuerungsvorrichtung als Lambdaregler
- 48b: Funktion der Steuerungsvorrichtung als Regelvorrichtung zur Tankentlüftung
- 50: Drucksensor
- 52: Luftfilter
- 54: Absperrventil
- 56: Lambdasonde

## Patentansprüche

1. Verfahren zum Entlüften eines Kraftstofftanksystems einer Brennkraftmaschine, das
- einen Kraftstofftank (10),
- einen Kraftstoffdampffilter (14), der in fluidleitender Verbindung mit einer Umgebungsmündung (44) steht,
- eine von dem Kraftstofftank (10) zu dem Kraftstoffdampffilter (14) führende Entlüftungsleitung (12),
- eine von dem Kraftstoffdampffilter (14) zu einem Frischgasstrang (18) der Brennkraftmaschine führende Spülgasleitung (16),
- eine in die Spülgasleitung (16) integrierte Spülgasfördervorrichtung (46) und
- ein in die Spülgasleitung (16) integriertes Regelventil (42)
umfasst, wobei die Brennkraftmaschine weiterhin einen Abgasstrang (26) mit darin integrierter Lambdasonde (56) aufweist und wobei eine Ansteuerung der Spülgasfördervorrichtung (46) basierend auf dem Messsignal des Lambdasensors (56) durchgeführt wird, um einen Mengenstrom des Spülgases in der Spülgasleitung (16) zu regeln, **dadurch gekennzeichnet, dass** auch eine Ansteuerung des Regelventils (42) basierend auf dem Messsignal des Lambdasensors (56) durchgeführt wird, um den Mengenstrom des Spülgases in der Spülgasleitung (16) zu regeln, wobei eine Ansteuerung der Spülgasfördervorrichtung (46) und des Regelventils (42) für zumindest eine dieser Komponenten unter Berücksichtigung des Ansteuerwerts der anderen Komponente durchgeführt wird, wobei die Spülgasfördervorrichtung (46) in mehreren Antriebsdrehzahlstufen betrieben und das Regelventil (42) in einem Ansteuerbereich angesteuert werden kann, wobei von einem Betrieb der Spülgasfördervorrichtung (46) in einer relativ kleinen Antriebsdrehzahlstufe zu einem Betrieb in einer relativ großen Antriebsdrehzahlstufe gewechselt wird, wenn während eines Betriebs der Spülgasfördervorrichtung (46) in der relativ kleinen Antriebsdrehzahlstufe trotz einer maximalen Ansteuerung des Regelventils (42) ein größerer Spülgasbedarf ermittelt wird.

2. Verfahren gemäß Anspruch 1, **dadurch gekennzeichnet, dass** zur Ansteuerung der Spülgasfördervorrichtung (46) und/oder des Regelventils (42) der Absolutwert des Messsignals des Lambdasensors (56) und/oder ein aus diesem Absolutwert abgeleiteter Korrekturwert für einen Lambdaregler (48b) der Brennkraftmaschine genutzt wird.

3. Brennkraftmaschine mit
- einem Verbrennungsmotor (20),
- einem Frischgasstrang (18) zum Zuführen von Frischgas zu dem Verbrennungsmotor (20),
- einem eine Lambdasonde umfassenden Abgasstrang (26) zum Abführen von Abgas von dem Verbrennungsmotor (20),
- einem Kraftstofftanksystem, das
- einen Kraftstofftank (10),
- einen Kraftstoffdampffilter (14), der in fluidleitender Verbindung mit einer Umgebungsmündung (44) steht,
- eine von dem Kraftstofftank (10) zu dem Kraftstoffdampffilter (14) führende Entlüftungsleitung (12),
- eine von dem Kraftstoffdampffilter (14) zu dem Frischgasstrang (18) der Brennkraftmaschine führende Spülgasleitung (16),
- eine in die Spülgasleitung (16) integrierte Spülgasfördervorrichtung (46) und
- ein in die Spülgasleitung (16) integriertes Regelventil (42) umfasst, und mit
- einer Steuerungsvorrichtung (48),
**dadurch gekennzeichnet, dass** die Steuerungsvorrichtung (48) zur automatisierten Durchführung eines Verfahrens gemäß einem der vorhergehenden Ansprüche ausgebildet ist.

4. Brennkraftmaschine gemäß Anspruch 3, **gekennzeichnet durch** einen in die Spülgasleitung (16) integrierten Druck- und/oder Temperatursensor (50).

5. Brennkraftmaschine gemäß einem der Ansprüche 3 oder 4, **gekennzeichnet durch** ein in die Spülgasleitung (16) integriertes Absperrventil (54).

## Claims

1. Method for venting a fuel tank system of an internal combustion engine having
- a fuel tank (10),
- a fuel vapor filter (14) fluidically connected to a surroundings opening (44),
- a vent line (12) leading from the fuel tank (10) to the fuel vapor filter (14),
- a purge gas line (16) leading from the fuel vapor filter (14) to a fresh gas tract (18) of the internal combustion engine,
- a purge gas delivery device (46) integrated into the purge gas line (16) and
- a closed-loop control valve (42) integrated into the purge gas line (16),
the internal combustion engine further having an exhaust gas tract (26) comprising an integrated lambda probe (56), and the purge gas delivery device (46) being controlled on the basis of the measurement signal from the lambda sensor (56) in order to control, in a closed loop, a mass flow of the purge gas in the purge gas line (16), **characterized in that** the closed-loop control valve (42) is also controlled on the basis of the measurement signal from the lambda sensor (56) in order to control, in a closed loop, the mass flow of the purge gas in the purge gas line (16), at least one component out of the purge gas delivery device (46) and the closed-loop control valve (42) being controlled whilst taking into account the control value of the other component, it being possible for the purge gas delivery device (46) to be operated in a plurality of drive speed stages and for the closed-loop control valve (42) to be controlled in a control range, a change being made from operation of the purge gas delivery device (46) in a relatively small drive speed stage to operation in a relatively large drive speed stage if, during operation of the purge gas delivery device (46) in the relatively small drive speed stage, a greater purge gas requirement is detected despite a maximum control of the closed-loop control valve (42).

2. Method according to claim 1, **characterized in that** the absolute value of the measurement signal from the lambda sensor (56) and/or a correction value for a lambda controller (48b) of the internal combustion engine, which correction value is derived from said absolute value, is used in order to control the purge gas delivery device (46) and/or the closed-loop control valve (42).

3. Internal combustion engine, comprising
- a combustion motor (20),
- a fresh gas tract (18) for supplying fresh gas to the combustion motor (20),
- an exhaust gas tract (26) for discharging exhaust gas from the combustion motor (20), which exhaust gas tract has a lambda probe,
- a fuel tank system having
- a fuel tank (10),
- a fuel vapor filter (14) fluidically connected to a surroundings opening (44),
- a vent line (12) leading from the fuel tank (10) to the fuel vapor filter (14),
- a purge gas line (16) leading from the fuel vapor filter (14) to the fresh gas tract (18) of the internal combustion engine,
- a purge gas delivery device (46) integrated into the purge gas line (16) and
- a closed-loop control valve (42) integrated into the purge gas line (16), and comprising
- an open-loop control device (48),
**characterized in that** the open-loop control device (48) is designed to carry out a method according to any of the preceding claims in an automated manner.

4. Internal combustion engine according to claim 3, **characterized by** a pressure sensor and/or temperature sensor (50) integrated into the purge gas line (16).

5. Internal combustion engine according to either of claims 3 and 4, **characterized by** a shut-off valve (54) integrated into the purge gas line (16).

## Revendications

1. Procédé de dégazage d'un système à réservoir de carburant d'un moteur à combustion interne, qui comprend
- un réservoir de carburant (10),
- un filtre à vapeur de carburant (14) qui est en liaison par conduction de fluide avec une embouchure vers l'environnement (44),
- une conduite de dégazage (12) conduisant du réservoir de carburant (10) au filtre à vapeur de carburant (14),
- une conduite de gaz de purge (16) conduisant du filtre à vapeur de carburant (14) à une ligne de gaz frais (18) du moteur à combustion interne,
- un dispositif de transport de gaz de purge (46) intégré dans la conduite de gaz de purge (16) et
- une soupape de régulation (42) intégrée dans la conduite de gaz de purge (16),
dans lequel le moteur à combustion interne présente en outre une ligne de gaz d'échappement (26) comportant une sonde lambda (56) intégrée dans celle-ci, et dans lequel une commande du dispositif de transport de gaz de purge (46) est réalisée sur la base du signal de mesure de la sonde lambda (56), afin de réguler un flux quantitatif du gaz de purge dans la conduite de gaz de purge (16), **caractérisé en ce qu'**une commande de la soupape de régulation (42) est également réalisée sur la base du signal de mesure de la sonde lambda (56), afin de réguler le flux quantitatif du gaz de purge dans la conduite de gaz de purge (16), dans lequel une commande du dispositif de transport de gaz de purge (46) et de la soupape de régulation (42) est réalisée pour au moins l'un de ces composants en tenant compte de la valeur de commande de l'autre composant, dans lequel le dispositif de transport de gaz de purge (46) peut être exploité dans plusieurs niveaux de vitesse d'entraînement et la soupape de régulation (42) peut être commandée dans une plage de commande, dans lequel on passe d'une exploitation du dispositif de transport de gaz de purge (46) dans un niveau de vitesse d'entraînement relativement petit à une exploitation dans un niveau de vitesse d'entraînement relativement grand si, pendant une exploitation du dispositif de transport de gaz de purge (46) dans le niveau de vitesse d'entraînement relativement petit, un besoin en gaz de purge plus important est déterminé malgré une commande maximale de la soupape de régulation (42).

2. Procédé selon la revendication 1, **caractérisé en ce que** pour commander le dispositif de transport de gaz de purge (46) et/ou la soupape de régulation (42), la valeur absolue du signal de mesure de la sonde lambda (56) et/ou une valeur de correction dérivée de cette valeur absolue sont utilisées pour un régulateur lambda (48b) du moteur à combustion interne.

3. Moteur à combustion interne comportant
- un moteur à combustion (20),
- une ligne de gaz frais (18) pour l'amenée de gaz frais au moteur à combustion (20),
- une ligne de gaz d'échappement (26) comprenant une sonde lambda pour l'évacuation de gaz d'échappement du moteur à combustion (20),
- un système à réservoir de carburant qui comprend
- un réservoir de carburant (10),
- un filtre à vapeur de carburant (14) qui est en liaison par conduction de fluide avec une embouchure vers l'environnement (44),
- une conduite de dégazage (12) conduisant du réservoir de carburant (10) au filtre à vapeur de carburant (14),
- une conduite de gaz de purge (16) conduisant du filtre à vapeur de carburant (14) à la ligne de gaz frais (18) du moteur à combustion interne,
- un dispositif de transport de gaz de purge (46) intégré dans la conduite de gaz de purge (16) et
- une soupape de régulation (42) intégrée dans la conduite de gaz de purge (16),
et comportant
- un dispositif de commande (48),
**caractérisé en ce que** le dispositif de commande (48) est conçu pour l'exécution automatique d'un procédé selon l'une quelconque des revendications précédentes.

4. Moteur à combustion interne selon la revendication 3, **caractérisé par** un capteur de pression et/ou de température (50) intégré dans la conduite de gaz de purge (16).

5. Moteur à combustion interne selon l'une des revendications 3 ou 4, **caractérisé par** une soupape d'arrêt (54) intégrée dans la conduite de gaz de purge (16).
